# EUROPEAN PATENT APPLICATION

(11) **EP 4 624 191 A1**
(43) Date of publication of application: **01.10.2025**
(21) Application number: 24167859.8
(22) Date of filing: 29.03.2024
(51) Int. Cl.: B60B 27/00, B60B 27/02, B60B 27/04

(54) **HUB FOR A BICYCLE**

(71) Applicant: Glory Wheel Enterprise Co., Ltd., Taichung City 42880 (TW)
(72) Inventor: LEE, Chien-Hao, 42880 Taichung City (TW)
(74) Representative: Cabinet Chaillot

(57) **Abstract**

A hub for a bicycle has a body (10) which is hollow and tubular, an inner gear (14) which is arranged on an inner surface at an end of the body (10). A gear set (20) is engaged with the inner gear (14), and a wheel base (30) is rotatably engaged with the gear set (20) unidirectionally. Two shock-absorbing gaskets (40) are attached respectively to two sides of the gear set (20).

## Description

The present invention relates to a bicycle hub, especially to a bicycle hub with shock-absorbing and noise-reducing effects.

Using an axle to penetrate and connect a bicycle hub on a bicycle is a conventional way to make a bicycle wheel rotate around the axle. A conventional hub mainly includes a body, multiple bearings, a gear set and a wheel base. The body is mounted around the axle, the multiple bearings and the gear set are arranged in the body to allow the body to be rotated relative to the axle. The wheel base is also mounted around the axle and is connected to a flywheel/sprocket set of the bicycle. An annular gear engaged with the gear set unidirectionally is mounted in the wheel base. Thus, when a rider stepping the pedals of the bicycle to move forward, the flywheel/sprocket set may drive the wheel base to rotate, and the body is driven to rotate through the unidirectional engagement between the annular gear and the gear set. Accordingly, the bicycle wheel may be rotate around the axle. If the rider reverses a stepping direction of the pedals, an idling may be formed between the annular gear and the gear set.

In order to make a rotation between the annular gear and the gear set smoother, lubricating oil is usually applied between the gear set and the annular gear. However, after a period of riding, the lubricating oil will gradually drain away and the lubrication will be lost and vibration and noise be form between the gear set and the annular gear, which are be made in metal. The vibration will be transmitted to the bicycle frame or even the handlebars through the body, the wheel base or other structures of the bicycle to affect the smoothness of riding.

in order to prevent the vibration be transmitted to the bicycle frame or even the handlebars and avoid the noise be generated during bicycle riding. the present invention provides a hub for a bicycle, comprising a body which is hollow and tubular, an inner gear which is formed on an inner surface at an end of the body. A gear set is engaged with the inner gear, and a wheel base is rotatably engaged with the gear set unidirectionally. Two shock-absorbing gaskets are attached respectively to two sides of the gear set.

Wherein, two receiving grooves for placing at least one the shock-absorbing gasket are respectively arranged on two sides of the gear set.

Wherein, two ends of the body respectively form an annular plate which is applied to integrate with the spokes of the wheel.

Wherein, plurality of bearings is arranged in the body.

Wherein, two bearings are respectively arranged at two ends of the body.

Wherein, two wheel bearings are placed and spaced apart from each other in the wheel base and a spacer is provided in the wheel base and located between the two wheel bearings.

Wherein, a shock-absorbing ring is sleeved on the spacer, and an outer surface of the shock-absorbing ring abuts the wheel base.

Due to the position of two shock-absorbing gaskets and the shock-absorbing ring. When a lubricating oil filled is lost due to long-term riding, the shock-absorbing gasket and the shock-absorbing ring can absorb the vibration generated by gear engaging or gear skipping between the gear set and the annular gear, and can present the shock-absorbing and noise-preventing effects, which can improve the smoothness when bicycle riding.

### IN THE DRAWINGS

Fig. 1 is an exploded perspective view of a hub in accordance with the present invention;
Fig. 2 is a cross sectional side view of the hub in Fig. 1; and
Fig. 3 is an enlarged cross section side view of the hub in Fig. 1;

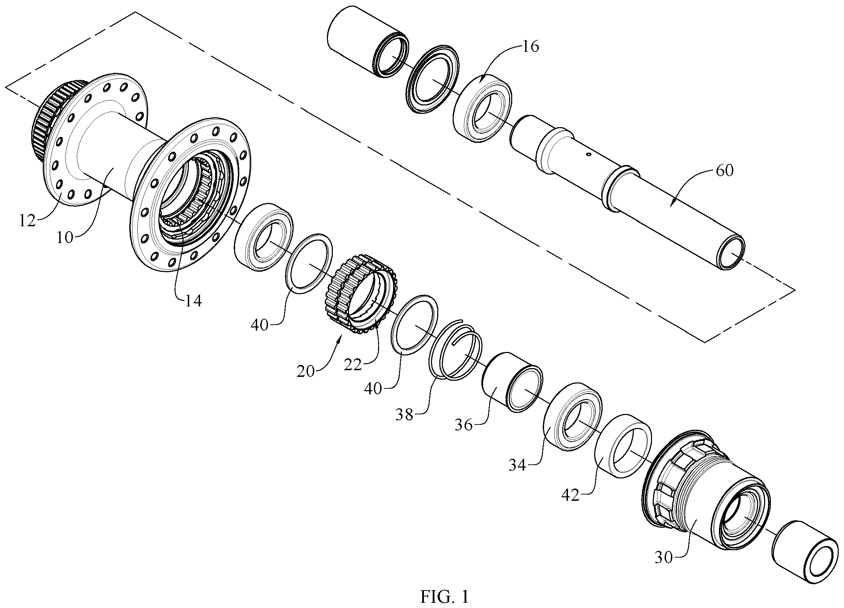

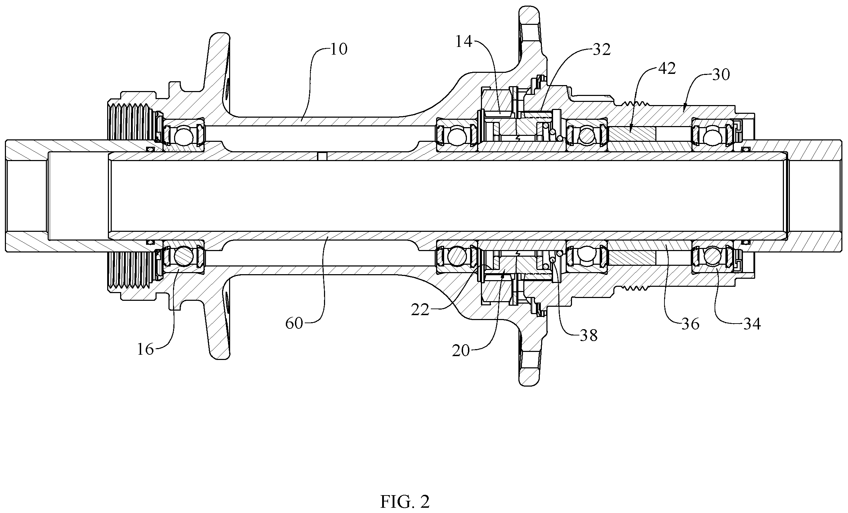

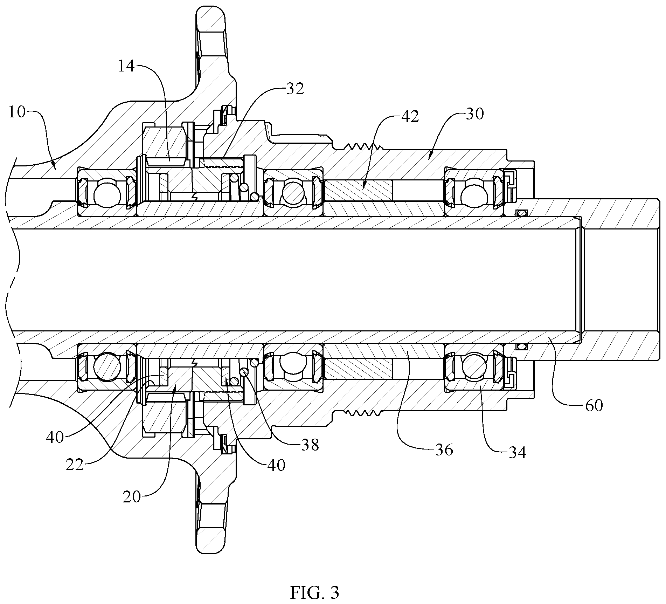

In order to make purposes, technical solutions, and advantages of the present invention to be clearer, the following content provides some preferred embodiments in accordance with the present invention. With reference to Fig. 1 to Fig. 3, a hub of a bicycle in accordance with the present invention is rotatably mounted around an axle 60, and is connected to a bicycle wheel. The hub comprising a body 10, a gear set 20 and a wheel seat 30. The body 10 is hollow and tubular, two annular plates 12 are formed respectively on positions near two ends of the body and are connected with the spokes of a wheel of the bicycle. An inner gear 14 is formed on an inner surface at one of the ends of the body 10 and multiple bearings 16 are arranged in the body 10 to allow the body to be rotated relative to the axle 60. Preferably, two bearings 16 are respectively arranged at two ends of the body 10.

The gear set 20 is held in one of ends of the body 10 and is engaged with the inner gear 14 in the body 10. The wheel base 30 is rotatably connected with the body 10 at the end corresponding to the gear set 20, and is connected to a flywheel/sprocket set of the bicycle. An annular gear 32 is mounted in the wheel base 30 and is engaged with the gear set 20 unidirectionally. Two wheel bearings 34 are placed and spaced apart from each other in the wheel base 30, and the two wheel bearings 34 are also mounted around the axle 60. In addition, a spacer 36 is provided in the wheel base 30, is mounted around the axle 60, and is located between the two wheel bearings 34. Two ends of the spacer 36 respectively abut against the two wheel bearings 34. An elastic member 38 abuts against one side of the gear set 20. The elastic member 38 can be a spring, and the other end of the elastic member 38 can abut against one of the wheel bearings 34.

The hub in accordance with this invention also has two shock-absorbing gaskets 40 which are attached respectively to two sides of the gear set 20. Each shock-absorbing gasket 40 is made of soft material such as rubber. In addition, two grooves 22 for receiving the shock-absorbing gasket 40 respectively are defined in two sides of the gear set 20. A shock-absorbing ring 42 is mounted around the spacer 36 of the wheel base 30, and the outer surface of the shock-absorbing ring 42 abuts the wheel base 30.

Thus, when a rider stepping the pedals of the bicycle to move forward, the flywheel/sprocket set may drive the wheel base 30 to rotate, and the body 10 is driven to rotate through a unidirectional engagement between the annular gear 32 and the gear set 20. Accordingly, the bicycle wheel may be rotate around the axle 60. If the rider reverses a stepping direction of the pedals, a gear skipping may be formed between the ring gear 32 and the gear set 20, and the body 10 and the wheel are remained in an idling state.

With such arrangement, the two shock-absorbing gaskets 40 are attached respectively to two sides of the gear set 20. If a lubricating oil filled in the gear set 20, the ring gear 32 or inner gear 14 is lost due to long-term riding, the bicycle can use the soft shock-absorbing gasket 40 to absorb the vibration generated by gear engaging or gear skipping between the gear set 20 and the annular gear 32. Therefore, the hub in accordance with the present invention not only can prevent the vibration from being transmitted to the body 10 and the bicycle frame, but also can avoid the noise be generated to improve the smoothness when bicycle riding.

Secondly, the shock-absorbing ring 42 provided on the spacer 36 of the wheel seat 30 also can present the shock-absorbing and noise-preventing effects to improve the smoothness when bicycle riding.

## Claims

1. A hub of a bicycle comprising:
a body (10) which is hollow and tubular, an inner gear (14) which is formed on an inner surface at an end of the body (10);
a gear set (20) held in the end of the body (10) and engaged with the inner gear (14); and
a wheel base (30) rotatably connected with the end of the body (10) corresponding to the gear set (20), an annular gear (32) is mounted in the wheel base (30) and is engaged with the gear set (20) unidirectionally, **characterized in that**, two shock-absorbing gaskets (40) are attached respectively to two sides of the gear set (20).

2. The hub as claimed in claim 1, **characterized in that**, two receiving grooves (22) for placing at least one the shock-absorbing gasket (40) are respectively defined in two sides of the gear set (20).

3. The hub as claimed in claim 2, **characterized in that**, an annular plates (12) are mounted respectively on positions near two ends of the body (10) and are applied to be connected with the spokes of the wheel.

4. The hub as claimed in any one of claims 1 to 3, **characterized in that**, multiple bearings (16) are arranged in the body.

5. The hub as claimed in claim 4, **characterized in that**, two bearings (16) are respectively arranged at two ends of the body (10).

6. The hub as claimed in claim 5, **characterized in that**, two wheel bearings (34) are placed and spaced apart from each other in the wheel base (30), and a spacer (36) is provided in the wheel base 30 and is located between the two wheel bearings (34).

7. The hub as claimed in claim 6, **characterized in that**, a shock-absorbing ring (42) is mounted around the spacer (36), and an outer surface of the shock-absorbing ring (42) abuts the wheel base (30).

8. The hub as claimed in any one of claims 1 to 3, **characterized in that**, two wheel bearings (34) are placed and spaced apart from each other in the wheel base (30), and a spacer (36) is provided in the wheel base 30 and is located between the two wheel bearings (34).

9. The hub as claimed in claim 8, **characterized in that**, a shock-absorbing ring (42) is mounted around the spacer (36), and an outer surface of the shock-absorbing ring (42) abuts the wheel base (30).
